Europäisches Patentamt

European Patent Office

Office européen des brevets

(11) Publication number: **0 417 827 A1**

## EUROPEAN PATENT APPLICATION

(21) Application number: 90202295.3

(51) Int. Cl.⁵: **C08J 5/04, D02J 13/00**

(22) Date of filing: 28.08.90

(30) Priority: 31.08.89 NL 8902194

(43) Date of publication of application:
20.03.91 Bulletin 91/12

(84) Designated Contracting States:
AT BE CH DE DK ES FR GB GR IT LI NL SE

(71) Applicant: STAMICARBON B.V.
Mijnweg 1
NL-6167 AC Geleen(NL)

(72) Inventor: Marissen, Roelof
Geentstraat 64
NL-6121 ZC Born(NL)
Inventor: Hornman, Hans Hubertus Henricus
Norbertijnenstraat 72
NL-6166 AL Geleen(NL)

(54) **Fabric of thermoplastic fibre and continuous reinforcing fibre.**

(57) The invention relates to a fabric of thermoplastic fibres and continuous reinforcing fibres suited for being processed as a thermoplastic composite prepreg, the thermoplastic fibres of which fabric have a melting point lower than that of the reinforcing fibres and are heated up to and for some time kept at a temperature 50 to 15 degrees Centigrade below the melting point of the thermoplastic material before being processed to form the fabric.

Fabrics of thermoplastic fibres and reinforcing fibres according to the invention can be used in all areas where high-grade fibre-reinforced plastics are advantageous and notably where it is an advantage that flat sheets of fabric can be subjected to a cold elastic moulding process to conform to the mould for the thermoforming process. Examples are the automotive industry, sports goods, domestic articles (boxes for microwaves), housings for electronic apparatuses, satellite dishes, the aircraft industry, shipbuilding, house construction, caravans,

## FABRIC OF THERMOPLASTIC FIBRE AND CONTINUOUS REINFORCING FIBRE

The invention relates to a fabric of thermoplastic fibres and continuous reinforcing fibres suited for being processed as a thermoplastic composite prepreg, the thermoplastic fibres having a melting point lower than that of the reinforcing fibres. Such a fabric is known from EP-A-0182.335.

EP-A-0182.335 describes a fabric made of thermoplastic fibres and reinforcing fibres. The fabric is preferably processed by heating it under pressure to beyond the melting point of the thermoplastic material, so that the thermoplastic material will flow round the reinforcing fibres and thus form the matrix of the composite product formed.

The disadvantage is that during this so-called 'thermoforming' of the prepreg the thermoplastic fibres will shrink, while the non-shrinking reinforcing fibres, which, before the thermoforming, were substantially stretched and were mainly parallel with the thermoplastic fibres in the fabric, have a surplus length and form 'loops'.

Consequently, the mechanical properties of the resulting material are worse than they would be if the reinforcing fibres continued to be substantially stretched.

The object of the invention is to provide a fabric that does not have said disadvantage.

This is achieved according to the invention in that the thermoplastic fibres, before being processed to form the fabric, are heated and are kept for some length of time at a temperature of 50 to 15 degrees Centigrade below the melting point of the thermoplastic material.

The reduction of shrinkage problems in synthetic fibre has been known from the clothing industry. Among the terms used for it are annealing or heat-setting. Fibres made for use in clothing are subjected, if so desired, to a pre-shrinkage treatment using steam. Temperatures higher than that of steam are not applied, because, when used, clothing is generally not heated beyond such temperatures.

When the fibres are heated, they will normally shrink. In the processing of the fabric formed with the fibres, according to the invention however, they will hardly shrink any more, so that materials with relatively favourable properties are formed.

In a first preferred embodiment, this heating and continued supply of heat is effected with the thermoplastic fibres wound on a reel or bobbin.

This winding is preferably done in a zig-zag winding pattern in order to prevent the fibres as far as possible from getting stuck together during the heating. Subsequently the whole reel can be placed in an oven. It is possible to have the oven process carried out under vacuum or in an inert atmosphere, but this is not essential.

When the fibres are wound on a reel, a tension is created by the shrinkage during heating, which tension causes the material to be drawn to virtually the same degree as the shrinkage.

The heating temperature is 50 to 15°C, and preferably 40-20°C, below the melting point of the thermoplastic material. When the temperature is too low, the thermoplastic fibre will eventually yet show too high a degree of shrinkage, and when the temperature is too high, the fibre will melt and get stuck, so that it can no longer be unwound from the reel then. The precise limits, however, depend on the material used and can be determined by the person skilled in the art.

The heating lasts from a few minutes to a few hours, generally from 1 to 5 hours. A limiting factor is the heat conduction in the fibres wound onto the reel. The better the heat conduction, the shorter the heat treatment may last. The thinner the layer of wound-up thermoplastic fibre, the shorter the heat treatment may last. It is possible for the reel to be heated from both the inside and the outside to shorten the time necessary for the heat treatment.

In a second preferred embodiment the heat treatment takes place in a continuous process. This is possible, for instance, by passing the thermoplastic fibre through an oven at a low tension, in which process the shrinkage equals the elongation. This process also has the advantage that the treatment of the fibre will take just a short time, because the fibre heats rapidly.

It is possible for the thermoplastic fibres and the reinforcing fibres first to be combined to form a hybrid bundle and for the whole hybrid bundle subsequently to be heated and to keep the bundle heated for some time. The advantage of this process is that the tension on the hybrid bundle is less inclined to result in an undesired extra elongation of the thermoplastic bundle when the process takes place in the form of, for instance, the continuous process described above. However, it is possible also to do it on a reel as described above likewise. The handling of the fibre is facilitated by such combination.

The thermoplastic fibres may consist of any thermoplastic material. For its application according to the invention it is important that the thermoplastic material should be available in the form of a fibre. This is in principle the case with virtually all thermoplastic materials the molecular weight of which is high enough, but preference is given to choosing a crystalline or semi-crystalline thermoplastic material for that purpose. The thermoplastic material can be chosen, for instance, from polyamides (PA), such as nylon 6, nylon 6,6, nylon 4,6 (Stanyl$^R$), nylon 8, nylon 6,10, nylon 11, nylon 12, etc., polyolefins, such as polypropylene (PP), polyethylene (PE), polytetrafluoroethylene (PTFE), polyphenylene ether (PPE or PPO), etc., amorphous and/or crystalline polyesters such as polyalkyleneterephthalates, such as polyethyleneterephthalate (PETP or PET), polybutadieneterephthalate (PBT), etc., or polyimides (PI), such as polyetherimide (PEI), polyamideimide (PAI), or polymethyl(meth)acrylate (PMMA), polyethylmethacrylate (PEMA). Further, polyphenylenesulphide (PPS), polyvinyl fibres, such as polyvinyl-alcohol (PVA), poly-vinylacetate (PVAc), ethylenevinylacetate copolymer (EVA), poly-vinylchloride (PVC), polyvinylidenechloride (PVDC), copolymers of vinylchloride and vinylidenechloride or polyvinylidenefluoride (PVDF or PVF2), polyethyleneglycol (PETG), styrene-containing copolymers, such as polystyrene (PS), polymonochlorostyrene or styreneacrylonitrile copolymers (SAN), polyacrylonitrile (PAN), polyarylenesulphideketone, polyoxymethylene (POM), polycarbonate (PC), polyethers (PEth), polyetherketone (PEK), polyetherketone-ketone (PEKK), polyetheretherketone (PEEK), polyacetals, poly-acrylic acid, polyurethanes (PUR), polyarylic acid (PAA), cellulose esters, polybenzimidazole (PBI), and also copolymers and blends of said substances can be used.

Preference is given to choosing the thermoplastic material from polyalkyleneterephthalates and polyamides.

Most preferably the thermoplastic material is PETP or nylon 4,6. PETP has a melting point of 255 to 260°C. Using PETP, the heating temperature according to the invention is therefore preferably 215-240°C.

Fibres that can be used according to the invention will mostly be drawn during the production process. Drawn fibres have so far been liable to shrinkage during subsequent heating steps. Undrawn fibres, for instance fibres still in an extruded phase before drawing, the so-called 'undrawn yarns', can be used according to the invention also, because these undrawn yarns, too, have a certain degree of orientation as a result of the extrusion process, so that they will shrink during heating.

The orientation of the thermoplastic molecules in the fibres can be analyzed using the customary analytical techniques, such as Wide Angle X-ray (WAX) or Short Angle X-ray (SAX). As undrawn yarns are not yet stretched, they have special properties. The fibres will readily be elongated by a light pull. When using undrawn yarns, it will therefore be an advantage to combine the fibres with reinforcing fibres before their further treatment, as described above.

Within the scope of this invention a thermoplastic fibre means a continuous mono-filament, a small bundle of continuous monofilaments or a small bundle of nearly continuous filaments. Nearly continuous filaments are filaments which, once they have been put together in a small bundle, behave as if they were a small bundle of continuous filaments. This last-mentioned fact is important in the anti-shrink treatment according to the invention and in the processing of the fibre for the formation of a fabric.

The thermoplastic monofilaments preferably have a diameter of at most 100 μm and most preferably a diameter of about 20 μm. Filaments thicker than 100 μm are difficult to process into a fabric.

Some commercially available fibres are coated with a protective layer. This layer may have to be removed first, for instance by heating.

It is possible also to use mixtures of two or more thermoplastic fibres.

The reinforcing fibres can be chosen from any material available in the form of a fibre provided, however, that it has a melting point higher than that of the thermoplastic material and that in the thermoforming process the fibres do not shrink, or hardly so. The difference in melting point should be such, that it is possible to melt the thermoplastic matrix-forming fibers without melting the reinforcing fibers. Preference is given to using the fibres in a continuous or semi-continuous state.

The reinforcing fibres may be glass, carbon, aramide, silicon carbide, aluminium oxide, asbestos, ceramics, graphite, metal or one of the above-mentioned thermoplastic materials if the thermoplastic reinforcing fibres have a higher melting temperature than the thermoplastic matrix-forming fibres and, at the melting temperature of the matrix-forming thermoplastic fibres, hardly shrink or shrink as much as the matrix-forming thermoplastic fibres. This can be achieved according to the invention by heating the higher-melting thermoplastic reinforcing fibres for some length of time also at the melting temperature of the matrix-forming thermoplastic fibres. The reinforcing fibres used may also be polyvinyl alcohol or polyolefin fibres with a high tensile strength and a high modulus, prepared e.g. in a gel process as described in GB-A-2.051.667 or GB-A-2.042.414. Again, a matrix-forming thermoplastic fibre must then be chosen with a melting point far enough from the melting point of these polyolefin fibres, for instance lineair low-density polyethylene.

The fibres preferably consist of glass, carbon or aramide.

Most preferably the fibres consist of glass.

It is possible also to use mixtures of two or more types of reinforcing fibre.

Thermoplastic fibres and reinforcing fibres are processed to form a fabric by weaving or plaiting these. Other processes for making fabrics are possible, but the invention is of particular advantage when thermoplastic fibres and reinforcing fibres are parallel or virtually parallel in the fabric. Fabric means a two or possibly three-dimensional product built up from oriented fibres. These fibres may occur in the fabric unidirectionally (UD thread as warp with an occasional woof thread), bidirectionally with different warp and woof ratios or tridirectionally. The fabric is preferably bidirectional.

Treated thermoplastic fibres and the reinforcing fibres are preferably first brought together to form a hybrid bundle, which is then processed in the usual manner to form a fabric. The invention therefor relates also to a hybrid bundle consisting of thermoplastic fibres and reinforcing fibres, with the thermoplastic material chosen from polyalkylene terephthalates and having a certain degree of orientation, and with the reinforcing fibre chosen from the group of glass, carbon and aramid fibre, the thermoplastic fibre showing a shrinkage less than 1% when heated. Such a bundle has advantages that are comparable with the advantages of the fabric according to the invention.

The thermoplastic fibres and/or reinforcing fibres can be processed also in the form of a so-called preg-tow. This may be a twined bundle of fibres or a bundle of fibres provided with windings of another fibre to keep the bundle together. The disadvantage of twining is the warping in the end product, with a related reduction of the mechanical or dimensional properties.

Warping is the distortion caused by the twisting of the twined bundle. For this reason preference is given to winding an extra fibre round a bundle of fibres. This can be done, for instance, by passing the bundle of fibres through a hollow, rapidly rotating reel with a thermoplastic fibre (preferably heat-treated, too), so that an extra fibre is wound round the bundle of fibres. The extra fibre is preferably a thermoplastic fibre. The number of windings per meter can be pre-set by choosing the feeding and rotating rates. It has been found to be an advantage if there are 5 to 40 windings per metre. Preferably there are 10-20 windings per metre.

Winding an extra fibre round the hybrid bundle is an advantage, because it prevents a part of the fibres of said hybrid bundle from sagging from the bundle, which sagging may be caused by a differing stress or stiffness. Sagging would give rise to problems in the weaving process.

Reinforcing fibres can be added in an amount of up to 80% by volume. Preference is given to adding 25-80% by volume. Most preferably 40-60% by volume is added.

To the fabric can also be added thermoplastic powder, or one or more layers of fabric can be combined with one or more layers of sheeting or film of the same or of a different thermoplastic material or of a thermosetting material.

Besides, fillers and the usual additives can be added, either to the thermoplastic material, before it is being spun to form a fabric, or to the fabric, or to the prepreg in the thermoforming process.

The additives may be pigments, flow-improvers antiblocking agents, etc.

The fabrics are particularly suited to be piled up to form laminates, which are processed as prepregs under pressure in a heated mould. This may, for instance, be an ordinary double mould or a single mould with a vacuum bag.

The advantage of prepreg fabrics of thermoplastic fibres and reinforcing fibres over reinforcing fabrics impregnated with thermoplastic material is that the fabric can be draped when cold. This is of particular advantage in the thermoforming process when filling a mould of a complex geometry, because a fabric that allows itself to be draped will conform completely to the shape of the mould.

When processing the fabric as a prepreg, the conventional processes can be applied. Mostly the fabric is heated to a temperature at which the thermoplastic fibres will melt, but not yet degrade, and at which the reinforcing fibres will neither melt nor degrade. The thermoplastic fibres will generally be chosen from those thermoplastic materials that have a melting point above $100^{\circ}$ C and preferably above $130^{\circ}$ C, because otherwise the mechanical properties of a product obtained from such a fabric will not be high enough. In order to promote the wetting of the fibres, pressure will usually be exercised. This may be any pressure, but preferably a pressure of 5-70 bar.

At high pressures (beyond 100 bar) reinforcing fibres are less inclined to form loops as a result of the shrinkage of the thermoplastic fibres. In that case the invention is less advantageous. The process at high pressures is more difficult and expensive, however. The invention is therefore particularly suited for use at processing temperatures with average to low pressures. In vacuum bag moulding techniques it is possible to obtain a proper impregnation at differential pressures of 1 to 2 bar.

It is possible to vacuate the mould in which the prepreg is to be processed, in order to prevent air bubbles being trapped in the product and to improve wetting of the fibers.

The quality of the impregnation depends, inter alia, on the viscosity of the thermoplastic material applied. In view of the viscosity of PETP, preference is given with PETP to a pressure of 5-50 bar.

Fabrics of thermoplastic fibres and reinforcing fibres according to the invention can be used in all areas where high-grade fibre-reinforced plastics are advantageous and notably in those areas where it is an advantage for flat sheets of fabric to be subjected to elastic cold forming to conform to the mould for the thermoforming process. Examples are the automotive industry, sports goods, domestic articles (boxes for microwaves), housings for electronic apparatuses, satellite dishes, the aircraft industry, shipbuilding, house construction, caravans, furniture, vessels, helmets.

The invention will be elucidated by means of the following examples without being limited thereto.

## EXAMPLES I UP TO AND INCLUDING VI

### Heat treatment

PETP fibre bundles of 17 tex (= 17 g/km) were wound on a metal (heat-resistant) tube in a zig-zag pattern. The tube with the fibre bundles was heat-treated in an oven for 5 hours at a temperature of 230°C.

After this treatment, the residual shrinkage of the PETP fibre bundle, when heated to its melting point (without tensile load), was lower than 1%, whereas the shrinkage of non-heat-treated PETP amounted to 14%. A material having a shrinkage of 1% is technologically non-shrinking, which means that such shrinkage is too low for the reinforcing fibres to form loops in the thermoforming process for the production of fibre-reinforced material. Hence, this fibre-reinforced material has good mechanical properties, as described below.

### Composition of the fibre bundles

After the heat treatment the PETP fibres were assembled with bundles of glass fibre of 17 tex to form a preg-tow. The tex number ratio of the total number of PETP bundles and the total number of glass bundles was about 1.5 tex glass to 1 tex PETP. That means that the glass/matrix volume ratio was about 50:50. The assembled hybrid bundle was about 300 tex.

One of the PETP bundles was wound round the hybrid bundle with c. 10 windings per metre to keep the bundle together. This was done in the manner described above. This winding process facilitated the weaving process.

### Preparation of the fabric

Using these hybrid bundles a fabric was made with 90% of the bundles serving as warp and 10% as woof, that is at an angle of 90° to the warp threads (so-called 90/10 fabric). In addition, a fabric was made also with 50% warp thread and 50% woof thread (so-called 50/50 fabric). In either case the width was 12 cm. The quality of the fabric was good, there were no knots in it, the surface was regular.

### The processing of the fabric as prepreg

The fabrics produced as mentioned above were processed in three ways, moulding, vacuum bagging and GMT:

### 1. Examples I and II; moulding

A pile of 10 prepregs (example I: 90/90; example II: 50/50) was placed in a mould. For 5 minutes the mould exercised a pressure of 10 bar at 275°C. The mould was subsequently cooled to 150°C and opened, upon which the article produced could be taken out. The product was 1.6 mm thick.

### 2. Examples III and IV; vacuum bagging

Ditto as in experiment 1, using a vacuumbag technique in an autoclave instead of using a compression mould. In this vacuum bag technique the pressure above the bag was 7 bar. (Example III: 90/10; example IV: 50/50).

### 3. Examples V and VI; GMT-process

A pile of 10 fabrics was heated outside the mould to ca. 270° C without any pressure being exercised and placed in the mould, which had been preheated to a temperature of 150° C. (Example V: 90/10; example VI: 50/50). The mould was closed and exercised a pressure of 50 bar. After 2 minutes the mould was opened again and the product was removed. This third process is referred to as the GMT (glass mat thermoplast) process.

By applying the GMT process, short cycle times are possible.

That is why the GMT process is probably the process best suited for the large-scale processing of prepregs according to the invention.

The results of the products of all three processes looked good.

From the products speciments were sawn using a water-cooled diamond saw, on which specimens measurements were performed.

Four-point bending tests were made according to ASTM 790 M (L/D = 32) and ILSS tests according to Fokker standard Part IX. For the ILSS tests, specimens were made of 20 fabrics and a thickness of 3.2 mm. Before the testing, the specimens were dried for one hour at 80° C to remove the cooling water and subsequently they were kept in an oven for 30 minutes at 150° C (except for the specimens of the GMT process). The treatment in the oven at 150° C increases the crystallinity of PETP and with it the mechanical properties. The results of the tests are shown in table 1.

### Comparative examples A and B

PETP bundles of 17 tex, which had not been heat-treated, were assembled with bundles of glass fibre of 17 tex, using a ratio of 1.5:1, to form a hybrid bundle of about 300 tex.

Using this bundle a 90/10 fabric (A) and a 50/50 fabric (B) were woven.

These fabrics were dried for 1 hour at 150° C.

The fabrics were processed according to the moulding process described above to form products on which measurements were made according to the standards described above also.

The results are shown again in table 1.

TABLE I

| Test results | | | | |
|---|---|---|---|---|
| No. Prepreg proc. | Fabric | E(GPa) | S(GPa) | ILSS(MPa) |
| I | 90/10 | 35 | 0.70 | 45 |
| A | 90/10 | 26 | 0.24 | |
| II | 50/50 | 23 | 0.49 | 33 |
| B | 50/50 | 20 | 0.26 | |
| III | 90/10 | 29 | 1.09 | 48 |
| IV | 50/50 | 20 | 0.57 | 36 |
| V | 90/10 | not measured | | |
| VI | 50/50 | 22 | 0.40 | 31 |

Here E is the modulus of elasticity and S the breaking strength measured in the four-point bending test. The ILSS is a measure for the adhesion of the matrix to the fibre.

In a four-point bending test arrangement according to ASTM 790 M no creep was found in respect of the 90/10 material of example I for 1 hour at 120°C and a tension of 0.1 GP. The IZOD notch impact test according to ISO 180-1982 E showed a value higher than 125 KJ/m2. The HDT according to ASTM D 648-82 was 256°C. Comparing examples I and II with comparative examples A and B, it will be found that the heat treatment of the thermoplastic fibres before the weaving resulted in an improvement of the mechanical properties.

The invention is not limited to fibres or fibre bundles of a particular tex number.

The choice of the thickness of the bundle mainly depends on the capacities of the loom. By choosing a thicker bundle the process may be more economic.

## Claims

1. Fabric of thermoplastic fibres and continuous reinforcing fibres suited for being processed as a thermoplastic composite prepreg, the thermoplastic fibres having a melting point lower than that of the reinforcing fibres, characterized in that the thermoplastic fibres are heated before being processed to form the fabric and are kept for some time at a temperature of 50 to 15 degrees Centigrade below the melting point of the thermoplastic material.

2. Fabric according to claim 1, characterized in that the thermoplastic fibres are pre-shrunk, and drawn at the same time.

3. Fabric according to any one of claims 1-2, characterized in that the thermoplastic fibres and the reinforcing fibres are combined to form hybrid bundles, which bundles are processed to form a fabric.

4. Fabric according to claim 3, characterized in that around the hybrid bundle an extra thermoplastic fibre or reinforcing fibre is wound.

5. Fabric according to any one of claims 1-4, characterized in that the fabric consists of 25-80% by volume of reinforcing fibre and 75-20% by volume of thermoplastic fibre.

6. Fabric according to any of of claims 1-5, characterized in that the fabric consists of 40-60% by volume of reinforcing fibre and 60-40% by volume of thermoplastic fibre.

7. Fabric according to any one of claims 1-6, characterized in that the reinforcing fibre is chosen from the group consisting of glass, carbon and aramide.

8. Product obtained by using a fabric according to any one of claims 1-7, the fabric being moulded at a temperature above the melting point of the thermoplastic fibre and below the degradation point of the thermoplastic material and below the melting or degradation point of the reinforcing fibre.

9. Product according to claim 8, characterized in that the fabric is moulded at a pressure of 5 to 70 bar.

10. Product according to any one of claims 8-9, characterized in that it is dried and exposed for 30-60 minutes to a temperature of 120-160°C.

11. Hybrid fibre bundle consisting of thermoplastic fibres and reinforcing fibres, with the thermoplastic material chosen from the group of polyamides and polyalkylene terephthalates and having a certain degree of orientation, and with the reinforcing fibre chosen from the group of glass, carbon and aramide fibre, characterized in that the thermoplastic fibre, when heated to its melting point, has a shrinkage less than 2%.

12. Process for preparing a fabric by weaving thermoplastic fibres and continuous reinforcing fibres, which fabric is suited for being processed as a composite prepreg, characterized in that, before the weaving, the thermoplastic fibres are heated for 1-5 hours to a temperature of 50-15°C below the melting point of the thermoplastic material, during which period the fibres are kept in drawn condition.

European
Patent Office

EUROPEAN SEARCH
REPORT

Application Number

EP 90 20 2295

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 182 335   (PHILLIPS PETROLEUM)<br>* Claims *<br>— — — | 1-12 | C 08 J 5/04<br>D 02 J 13/00 |
| A | EP-A-0 138 294   (TEXTILE PRODUCTS)<br>— — — | | |
| A | GB-A-2 105 247   (COURTAULDS)<br>— — — | | |
| A | US-A-3 639 424   (T.F. GRAY et al.)<br>— — — | | |
| A | DE-A-3 733 446   (STAMICARBON)<br>— — — — — | | |

|  | TECHNICAL FIELDS SEARCHED (Int. Cl.5) |
|---|---|
|  | C 08 J<br>D 02 J |

The present search report has been drawn up for all claims

| Place of search | Date of completion of search | Examiner |
|---|---|---|
| The Hague | 10 December 90 | VAN GOETHEM G.A.J.M. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

 

& : member of the same patent family, corresponding
    document